# EUROPÄISCHE PATENTSCHRIFT

(11) **EP 3 491 706 B1**
(45) Veröffentlichungstag und Bekanntmachung des Hinweises auf die Patenterteilung: **27.05.2020**
(21) Anmeldenummer: 17751015.3
(22) Anmeldetag: 25.07.2017
(51) Int. Cl.: H02G 15/04, H01B 17/26

(54) **VORRICHTUNG MIT EINEM ISOLIERKÖRPER AUS KUNSTSTOFF**
DEVICE HAVING AN INSULATING BODY MADE OF PLASTIC
DISPOSITIF COMPORTANT UN CORPS ISOLANT EN MATIÈRE SYNTHÉTIQUE

(30) Priorität: 29.07.2016 DE 102016009294
(43) Veröffentlichungstag der Anmeldung: 05.06.2019
(73) Patentinhaber: Südkabel GmbH, 68199 Mannheim (DE)
(72) Erfinder: SCHRÖDER, Gero, 68775 Ketsch (DE); BITTMANN, Jürgen, 67259 Heuchelheim (DE)
(74) Vertreter: Wesch, Arno
(86) Internationale Anmeldenummer: PCT/EP2017/000897
(87) Internationale Veröffentlichungsnummer: WO 2018/019414

(56) Entgegenhaltungen:
- CH-B1- 698 181
- CN-A- 102 290 777
- DE-A1- 19 510 598
- GB-A- 875 919

## Beschreibung

Die Erfindung betrifft eine Vorrichtung nach dem Oberbegriff des Patentanspruchs 1.

Aus der DE 26 38 366 A ist ein Endabschluss mit einem Isolierkörper bekannt, der aus einzelnen, vorgefertigten und segmentartigen Schirmen aufgebaut ist. Dieser Isolierkörper weist einen Fortsatz auf, der einen Leiterbolzen umfängt. Ein Endverschluss mit einem Fortsatz ist auch aus der DE 78 10 482 U bekannt geworden. Ein weiterer Freiluftendverschluss, der eine innere Isolierung in sich aufnimmt, ist aus der DE 199 10 150 A1 bekannt.

Aus der US 4,670,625 A ist eine weitere innere, tubusartige Isolierung aus Polyurethanharz bekannt, die von segmentartigen Schirmen umgeben ist und aus dem obersten Schirm herausragt.

Die DE 10 2006 036 233 B4 zeigt einen Freiluftendverschluss mit einem Isolierkörper, in dem ein metallisches Stützrohr auf Hochspannungspotential liegt. Das Stützrohr ist mittels einer Kopfplatte mit einer Kopfarmatur verbunden, welche als äußeres Element vom Isolierkörper nach außen abragt.

Ein weiteres metallisches Stützrohr, welches mit einer nach außen abragenden Kopfarmatur verbunden ist, zeigt auch die Vorrichtung der US 2016/0 172 837 A1.

Aus der DE 28 45 868 C2 ist es bekannt, in einem elastomeren Isolierkörper ein kegelmantelförmiges Stützelement vorzusehen. Ein solches massives Stützelement erschwert das Deformieren beim Aufziehen eines elastomeren Isolierkörpers. Mit Bezug zu Stäben ist in der Schrift gelehrt, dass diese mit ihrem oberen Ende an einer Kopfarmatur befestigt sind und dass ihr unteres Ende von einer Fußarmatur gehalten ist.

Aus der CH 698 181 B1 ist bekannt, den Isolierkörper eines Endverschlusses zwischen einer Kopfarmatur und einer Fußarmatur einzufassen. Der aus Silikon bestehende Isolierkörper ist auf einem Fußflansch befestigt. Der Fußflansch ist Teil der Fußarmatur und mit dieser verschraubt.

Die Kopfarmatur weist einen Anschlusskopf auf, der direkt auf dem Isolierkörper befestigt ist. Auf dem Anschlusskopf wiederum ist eine Anschlusseinrichtung für einen Leiter angeordnet. Die Anschlusseinrichtung ist mit dem Anschlusskopf verschraubt. Ein O-Ring dichtet die Kopfarmatur ab.

Der aus der CH 698 181 B1 bekannte Endverschluss weist außerdem als Stützelemente zwölf Isolierstäbe mit Dicken von je 12 mm auf, welche in das Silikon des Isolierkörpers eingebettet sind.

Die Isolierstäbe sind an ihren gegenüberliegenden Enden jeweils mit der Kopfarmatur und der Fußarmatur verbunden und stützen sich an diesen Armaturen ab.

Der bekannte Endverschluss weist daher eine aufwendig zu fertigende Stützkonstruktion auf. Außerdem weist der Endverschluss eine Vielzahl von Bauteilen auf, welche miteinander verbunden, insbesondere verschraubt, werden müssen. Des Weiteren müssen sogar Abdichtungsmaßnahmen durch einen O-Ring vorgesehen werden, um diesen Endverschluss betriebstauglich zu gestalten.

Der Erfindung liegt daher die Aufgabe zu Grunde, eine Vorrichtung anzugeben, die zur Verwendung als Endverschluss oder Durchführung geeignet ist, welche bei bauteilearmem Aufbau ein möglichst geringes Gewicht zeigt und möglichst problemlos herstellbar und montierbar ist.

Die vorliegende Erfindung löst die zuvor genannte Aufgabe durch die Merkmale des Patentanspruchs 1.

Erfindungsgemäß ist der Isolierkörper elastisch ausgebildet oder weist ein elastomeres Material auf oder ist aus einem solchen gefertigt, wobei innerhalb des Isolierkörpers mehrere Stützelemente aufgenommen sind. Die Stützelemente sind zumindest im Kopfabschnitt selbsttragend angeordnet und liegen dabei innerhalb des Isolierkörpers und sind in diesen eingebettet.

Die Stützelemente stabilisieren den deformierbaren Isolierkörper, so dass dieser nur schwer in unerwünschter Weise verbogen, gedehnt, gestaucht oder tordiert werden kann.

Die Stützelemente sind aus einem elektrisch isolierenden Material gefertigt. Die Stützelemente enden mit einem freien Ende im Isolierkörper, ohne aus diesem herauszutreten. Die Stützelemente sind als Stäbe oder Stangen ausgebildet. Stäbe oder Stangen lassen sich fertigungstechnisch gut in einen Isolierkörper einbinden und sind in der Praxis gemeinsam mit dem Isolierkörper so deformierbar, dass dieser relativ leicht auf ein Kabel aufgezogen werden kann. Insoweit ist eine Vorrichtung, nämlich ein Endverschluss für ein Kabel oder eine Durchführung, angegeben, welche bei bauteilearmem Aufbau ein möglichst geringes Gewicht zeigt und möglichst problemlos montierbar ist.

Die Stützelemente könnten im Kopfabschnitt nicht miteinander verbunden sein, so dass die freien Enden der Stützelemente im Kopfabschnitt freistehend in den Isolierkörper eingebettet sind. Hierdurch können aufwendig zu umgießende Verbindungsmittel oder Stützeinrichtungen im Kopfabschnitt vermieden werden. Die Stützelemente könnten im Bereich des Kopfabschnitts nicht mit äußeren Elementen oder Stützeinrichtungen verbunden sein. Hierdurch werden die Stützelemente nahezu nicht durch Einflüsse auf äußere Elemente wie beispielsweise Kopfarmaturen beeinträchtigt.

Die Stützelemente könnten parallel zueinander angeordnet sein und die Kabelaufnahme umgeben. Durch die parallele oder im Wesentlichen parallele Anordnung kann ein schlank bauender Isolierkörper geschaffen werden.

Die Stangen oder Stäbe könnten eine Beschichtung aus Ableitermaterial, insbesondere Zinkoxid, aufweisen, um eine spannungsbegrenzende Funktion zu erfüllen.

Es ist auch denkbar, dass die freien Enden der Stäbe oder Stangen mit einem Fixierring oder einer ähnlichen Einrichtung verbunden sind, welche ebenfalls vollständig im Inneren des Isolierkörpers aufgenommen ist und nicht nach außen ragt. Bevorzugt ist der Fixierring oder ist die Einrichtung materialeinheitlich mit den Stangen oder Stäben ausgebildet. Es kann auch kein solcher Fixierring oder keine solche Einrichtung vorgesehen sein, so dass die Stäbe oder Stangen freistehend im Material des Isolierkörpers eingebettet sind.

Vor diesem Hintergrund ist denkbar, dass mindestens ein Stützelement aus einem Kunststoff oder einem glasfaserverstärkten Kunststoff gefertigt ist oder ein solches Material aufweist. Vorteilhaft werden elektrisch isolierende Kunststoffe verwendet. Insbesondere glasfaserverstärkte Kunststoffe gehen darüber hinaus einen hervorragenden Verbund, insbesondere einen Stoffschluss, mit einem Isolierkörper aus Kunststoff ein. Bevorzugt könnte als Kunststoff für das Stützelement oder die Stützelemente Polyamid verwendet werden. Auch glasfaserverstärktes Polyamid ist als Material für ein Stützelement denkbar.

Mindestens ein Stützelement könnte mit einem ableitenden und spannungsbegrenzenden Material beschichtet sein. So kann auch ein Stützelement eine Feldsteuerfunktion übernehmen.

Der Kopfabschnitt könnte eine Kuppe aufweisen, welche durch den Isolierkörper gebildet ist, wobei von der nach außen orientierten Oberfläche der Kuppe ausschließlich ein Fortsatz und/ oder ein Leiter, bevorzugt ein Leiterbolzen, abragen. Durch diese Ausgestaltung ragen nur sehr wenige oder gar keine Teile aus dem Isolierkörper heraus nach außen ab. Am Kopfabschnitt kann ausschließlich bevorzugt ein Leiterbolzen aus dem Inneren des Isolierkörpers elektrisch kontaktierbar nach außen abragen. Der Leiterbolzen ist dann von dem Fortsatz umfangen.

Hierdurch bettet der Isolierkörper im Kopfabschnitt alle wesentlichen Teile dicht in sich ein. Es sind keine separaten Dichtmittel und auch keine abdeckenden Flansche im Kopfabschnitt notwendig, die miteinander verschraubt werden müssen.

Der Leiterbolzen könnte in der Leiteraufnahme in einer dem Fachmann geläufigen Weise angeordnet sein, um mit einem Kabel in elektrisch leitender Verbindung zu stehen.

Der axiale Fortsatz des Isolierkörpers könnte die Leiteraufnahme umfangen, säumen und/ oder nach Art eines Mantels oder Sockels umgeben. Der Fortsatz bildet eine Art Dichtung, welche sich in Axialrichtung parallel zur Leiteraufnahme erstrecken und diese in Umfangsrichtung umgeben kann. Leiter können ohne den Einsatz von Dichtmitteln in der Leiteraufnahme unter Nutzung des Fortsatzes dicht festgelegt werden. Das Material des Isolierkörpers selbst wird als Dichtmittel genutzt.

Der Fortsatz könnte materialeinheitlich mit dem Isolierkörper ausgebildet sein und/ oder eine Klammernut aufweisen. Die Klammernut erleichtert das Festlegen einer Kappe auf dem Fortsatz.

Das Material des Isolierkörpers könnte durch einen Befestigungsflansch hindurch geführt sein und sich beidseits des Befestigungsflansches erstrecken, wobei der Isolierkörper eine Tülle für ein Kabel ausbildet. Der Befestigungsflansch kann so in radialer Richtung vom Isolierkörper abragen und zur Montage gut ergriffen werden. Die dabei ebenfalls gut ergreifbare und axial abragende Tülle kann leicht über ein Kabel gestülpt werden, weil sie leicht aufweitbar ist. Aus der Tülle kann zur Erdung problemlos eine Leitung herausgeführt werden. Die Tülle ist insoweit materialeinheitlich und einstückig mit dem Isolierkörper ausgebildet.

Ein Stützelement oder mehrere Stützelemente könnte bzw. könnten mit einem nicht freien Ende bzw. mit nicht freien Enden mittelbar oder unmittelbar mit einem Befestigungsflansch verbunden sein, welcher axial vom Kopfabschnitt beabstandet ist. Durch diese Maßnahme sind die Stützelemente, bevorzugt Stäbe oder Stangen, an einem Ende mit einem starren und mechanisch festen Befestigungsflansch verbunden. Das Stützelement kann bzw. die Stützelemente können sich am biegesteifen Befestigungsflansch abstützen und ist bzw. sind bevorzugt an diesem unmittelbar fixiert.

Der Isolierkörper könnte eine Verbindungsstelle oder alle Verbindungsstellen eines Stützelements oder aller Stützelemente mit dem Befestigungsflansch in sich aufnehmen und/ oder einbetten. Hierdurch sind die Verbindungsstellen oder eine einzelne Verbindungsstelle gegen äußere Angriffe geschützt. Des Weiteren werden diese bzw. wird diese durch die Einbettung gegen ein Abreißen oder Abbrechen stabilisiert.

In den Isolierkörper könnte ein Feldsteuerkörper aus leitfähigem Silikon oder aus refraktivem Kunststoff oder ein mit einem ableitenden und spannungsreduzierenden Material beschichteter Körper eingebettet sein. Kunststoff geht einen hervorragenden stoffschlüssigen Verbund mit dem umgebenden Isolierkörper aus Kunststoff ein. Denkbar sind auch andere Feldsteuerungen mittels ableitenden und spannungsbegrenzenden Beschichtungen.

Ein Stützelement könnte zumindest abschnittsweise in einen Feldsteuerkörper eingebettet und/ oder mit diesem stoffschlüssig verbunden sein und/ oder diesen durchgreifen. Hierdurch sind ein kompakter Aufbau und eine gute Feldsteuerung realisierbar.

Ein Befestigungsflansch und/ oder ein Leiterbolzen, könnte bzw. könnten mit mindestens einer Zugeinrichtung verbindbar sein und/ oder eine solche aufweisen. Durch die Zugeinrichtung kann der Befestigungsflansch und damit die gesamte Vorrichtung leicht ergriffen und aufgerichtet und/ oder ausgerichtet und/ oder gezogen werden. Hierzu kann auch in einem Leiterbolzen ein Gewinde vorgesehen sein, in den eine Zugeinrichtung reversibel einschraubbar ist. Auch im Befestigungsflansch können hierfür Gewinde vorgesehen sein.

Ein Befestigungsflansch könnte Ausnehmungen, Aussparungen und/ oder Einbuchtungen aufweisen. Neben Durchgängen für Schrauben könnte der Befestigungsflansch derart ausgeformt sein, dass er möglichst wenig Material und damit Masse aufweist. Hierdurch kann Gewicht eingespart werden. Des Weiteren kann der Befestigungsflansch derart ausgeformt werden, dass er besonders biegeresistent ist. Der Befestigungsflansch kann aus einem Metall oder verstärktem Kunststoff gefertigt sein oder ein Metall und/ oder einen Kunststoff aufweisen.

Der Isolierkörper könnte durch den Fortsatz zumindest abschnittsweise reversibel oder irreversibel verschließbar sein. Der Fortsatz könnte zusätzlich oder alternativ einen Anschluss für Druckgas aufweisen. Der Fortsatz könnte zumindest einen Kopfbereich reversibel oder irreversibel verschließen. Wenn eine Öffnung des Isolierkörpers in der Kuppe verschlossen ist, kann durch Stauchung des Isolierkörpers der Druck in dessen Innerem erhöht werden, so dass sich die Kabelaufnahme für das Kabel aufweitet. So kann das Einführen eines Kabels erleichtert werden, welches einen Außendurchmesser aufweist, der größer ist als der Innendurchmesser der zylindrischen Kabelaufnahme im Isolierkörper.

Die hier beschriebene Vorrichtung wird bevorzugt als Endverschluss, besonders bevorzugt als Freiluftendverschluss, verwendet bzw. ist als solcher ausgebildet.

Ein Freiluftendverschluss wird bevorzugt für Hoch- und Höchstspannungskabel von Freileitungen verwendet.

Der hier beschriebene Endverschluss wird ohne Isolierflüssigkeit verwendet. Er ist daher frei von Ölen oder ähnlichen Flüssigkeiten.

Denkbar sind aber auch Verwendungen der Vorrichtung in Schienenfahrzeugen oder als Durchführung in Transformatoren, Schaltanlagen oder Gebäuden. Insoweit kann die Vorrichtung auch als Durchführung ausgestaltet sein.

Die Vorrichtung ist bei Gleichspannungen und auch bei Wechselspannungen bei nahezu allen technischen Frequenzen verwendbar, bevorzugt bei Frequenzen im Bereich 0 bis 500 Hz.

Der Kunststoff des Isolierkörpers könnte als Silikon oder als Äthylen-Propylen-Dien-Kautschuk (EPDM) ausgebildet sein.

Die Merkmale der Kennzeichnungsteile der Ansprüche 12, 14 und 15 könnten im Rahmen dieser Offenbarung auch mit einer Vorrichtung bzw. einem Endverschluss kombiniert werden, die bzw. der nicht zwingend alle Merkmale des Patentanspruchs 1 aufweisen muss. Die Lehre der Ansprüche 12, 14 und 15 ist allgemein auf Endverschlüsse anwendbar.

In der Zeichnung zeigen
- Fig. 1: eine perspektivische Ansicht einer Vorrichtung, nämlich eines Freiluftendverschlusses für Kabel, der hier beschriebenen Art, mit einem im Wesentlichen zylindrisch verlaufenden Isolierkörper, welcher abragende Schirmlippen und Stützelemente in Form von Stäben aufweist,
- Fig. 2: eine Schnittansicht des Endverschlusses gemäß Fig. 1, wobei die Schnittebene in der Längsachse des Endverschlusses liegt, wobei längliche Stützelemente gezeigt sind, die sich parallel zur Längsachse erstrecken, im Isolierkörper eingebettet und im Befestigungsflansch fixiert sind, und wobei ein sich in Axialrichtung aufweitender Feldsteuerkörper vorgesehen ist,
- Fig. 3: eine Schnittansicht eines weiteren Endverschlusses, wobei die Schnittebene in der Längsachse des Endverschlusses liegt, wobei längliche Stützelemente gezeigt sind, die sich parallel zur Längsachse erstrecken, im Isolierkörper eingebettet und im Befestigungsflansch fixiert sind, wobei ein sich in Axialrichtung nicht aufweitender Feldsteuerkörper vorgesehen ist und wobei der Fortsatz eine Klammernut aufweist,
- Fig. 4: eine ausschnittsweise Schnittansicht des Bereichs des Endverschlusses gemäß Fig. 3, in dem ein Befestigungsflansch aus Metall angeordnet ist,
- Fig. 5: eine ausschnittsweise Schnittansicht des Bereichs des Endverschlusses gemäß Fig. 2, in dem ein Befestigungsflansch aus Metall angeordnet ist,
- Fig. 6: eine ausschnittsweise Schnittansicht eines Bereichs eines weiteren Endverschlusses, in dem ein Befestigungsflansch aus Metall angeordnet ist, wobei die Stützelemente den Feldsteuerkörper durchgreifen, und
- Fig. 7: eine Schnittansicht des Endverschlusses gemäß Fig. 1, wobei die Schnittebene orthogonal zur Schnittebene gemäß Fig. 2 orientiert ist und wobei gezeigt ist, dass der Befestigungsflansch im Wesentlichen quadratisch ausgebildet ist und in seinen Eckbereichen Durchgänge aufweist.

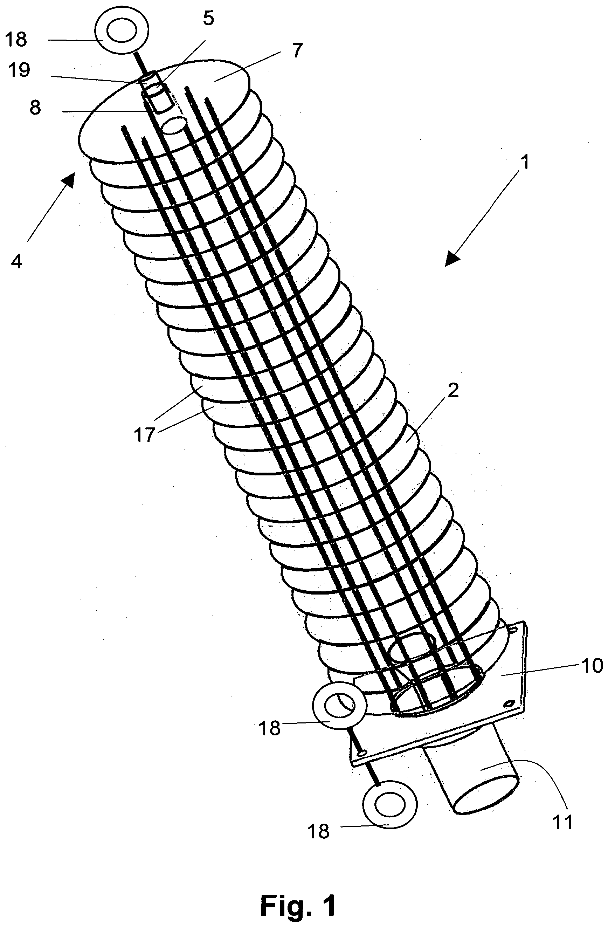

Fig. 1 zeigt eine Vorrichtung, nämlich einen Endverschluss 1, konkret einen Freiluftendverschluss, für ein nicht gezeigtes Kabel in einer perspektivischen Ansicht. Das Kabel kann in üblicher Weise abgeschält werden und mit dem Endverschluss 1 verbunden werden. Der Endverschluss 1 weist keine Isolierflüssigkeiten auf.

Ein Befestigungsflansch 10 und ein Leiterbolzen 19 sind mit mindestens einer Zugeinrichtung 18 verbindbar. Eine Zugeinrichtung 18 kann in zwei Richtungen vom Befestigungsflansch 10, nämlich nach oben oder unten, abragen. Die Zugeinrichtungen 18 können wahlweise am Leiterbolzen 19 oder am Befestigungsflansch 10 reversibel angebracht werden.

Der Isolierkörper 2 ist während der Montage durch den Fortsatz 8 zumindest abschnittsweise, nämlich im Kopfabschnitt 4, reversibel oder irreversibel verschließbar. Eine Montagehilfe kann einen Anschluss für Druckgas aufweisen.

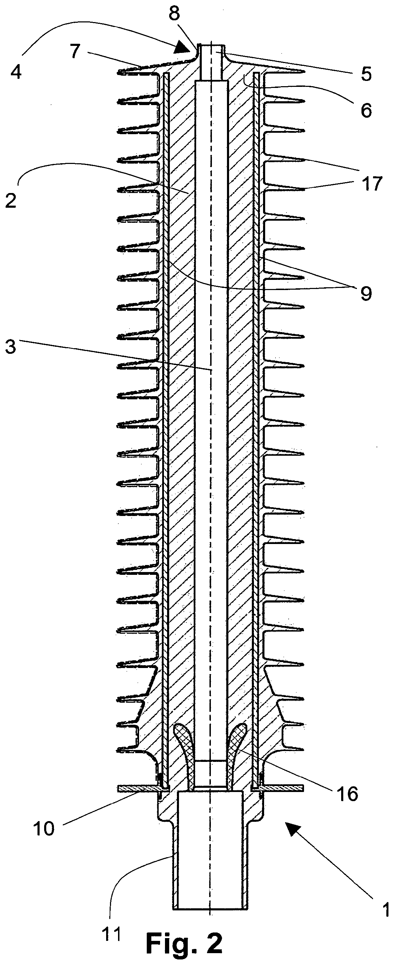

Fig. 2 zeigt, dass der Endverschluss 1 einen Isolierkörper 2 aus Kunststoff umfasst, wobei im Isolierkörper 2 eine Kabelaufnahme 3 für ein nicht gezeigtes Kabel ausgebildet ist. In einem Kopfabschnitt 4 des Isolierkörpers 2 ist eine Leiteraufnahme 5 für den ebenfalls nicht gezeigten Leiterbolzen 19 angeordnet und ausgebildet.

Der Leiterbolzen 19 ist üblicherweise mit dem nicht gezeigten Kabel elektrisch leitend verbunden und aus Metall gefertigt.

Der Kopfabschnitt 4 weist eine Kuppe 6 auf, welche durch den Isolierkörper 2 gebildet ist, wobei von der axial nach außen orientierten Oberfläche 7 der Kuppe 6 ausschließlich ein Fortsatz 8 abragt.

In Fig. 1 ist zusätzlich gezeigt, dass ausschließlich der Fortsatz 8 und ein Leiterbolzen 19, abragen. Der Leiterbolzen 19 ragt elektrisch kontaktierbar ab. Konkret ragt der Leiterbolzen 19 aus dem Inneren des Isolierkörpers 2 heraus nach außen ab und ist dabei elektrisch kontaktierbar.

Die Kabelaufnahme 3 für das Kabel ist als zylindrischer Hohlraum ausgebildet, welcher sich in axialer Richtung innerhalb des Isolierkörpers 2 erstreckt. Die mittige Längsachse der Kabelaufnahme 3 und des Isolierkörpers 2 fallen zusammen. Die Kabelaufnahme 3 mündet in die Leiteraufnahme 5, die sich koaxial zur Kabelaufnahme 3 erstreckt.

Der axiale Fortsatz 8 des Isolierkörpers 2 umfängt die Leiteraufnahme 5 nach Art eines Mantels. Der Fortsatz 8 ist eine Art Film aus dem Material des Isolierkörpers 2.

Der Isolierkörper 2 ist elastisch ausgebildet, weist ein elastomeres Material auf und ist aus diesem gefertigt. Innerhalb des Isolierkörpers 2 sind Stützelemente 9 aufgenommen, wobei die Stützelemente 9 zumindest im Kopfabschnitt 4 selbsttragend angeordnet sind und dabei innerhalb des Isolierkörpers 2 liegen und in diesen eingebettet sind.

Die Stützelemente 9 ragen nicht nach außen, sondern bleiben innerhalb des Isolierkörpers 2, so dass diese zumindest im Bereich des Kopfabschnitts 4 nicht mit äußeren Stützeinrichtungen verbunden sind. Die Stützelemente 9 sind im Isolierkörper 2 inhärent.

Die Stützelemente 9 sind aus einem glasfaserverstärkten Kunststoff gefertigt und als Stäbe ausgebildet, welche sich in axialer Richtung erstrecken.

Die Stäbe sind in das Material des Isolierkörpers 2 eingebettet und mit diesem stoffschlüssig verbunden. Die Stäbe sind parallel zu der Kabelaufnahme 3 orientiert und umgeben diese palisadenartig, wobei zwischen der Kabelaufnahme 3 und den Stäben ausreichend isolierendes Material des Isolierkörpers 2 liegt. Die Stützelemente 9 sind ebenfalls aus einem elektrisch isolierenden Material ausgebildet.

Die Stützelemente 9 sind unmittelbar mit einem Befestigungsflansch 10 verbunden, welcher axial vom Kopfabschnitt 4 beabstandet ist. Der Befestigungsflansch 10 ist aus einem Metall gefertigt, kann aber auch aus einem verstärkten Kunststoff gefertigt sein.

Das Material des Isolierkörpers 2 ist durch den Befestigungsflansch 10 hindurch geführt und erstreckt sich beidseits des Befestigungsflansches 10, wobei der Isolierkörper 2 eine Tülle 11 für ein nicht gezeigtes Kabel ausbildet. Die Tülle 11 ist zylindrisch ausgebildet und weist eine relativ geringe Wandstärke auf, so dass sie gut aufgeweitet und über ein Kabel gezogen werden kann.

Der Isolierkörper 2 weist Schirmlippen 17 auf, welche radial nach außen abragen, übereinander liegen und koaxial zueinander angeordnet sind. Der Isolierkörper 2 ist über seine größte Erstreckung im Wesentlichen zylindrisch ausgebildet, das heißt, dass ein Zylinder die Spitzen seiner Schirmlippen 17 über seine größte Erstreckung berührend umfangen könnte. Es ist jedoch auch denkbar, den Isolierkörper 2 konisch zu gestalten. Dieser könnte sich in Richtung des Kopfabschnitts 4 verjüngen.

Fig. 2 zeigt weiter, dass in den Isolierkörper 2 ein Feldsteuerkörper 16 aus leitfähigem Silikon eingebettet ist. Der Feldsteuerkörper 16 könnte auch aus refraktivem Kunststoff bestehen oder aus einem Material, welches mit spannungsbegrenzendem Ableitermaterial beschichtet ist. Der Feldsteuerkörper 16 ist im konkreten Fall im Querschnitt tulpenförmig, sich nämlich in Richtung des Kopfabschnitts 4 aufweitend, ausgebildet.

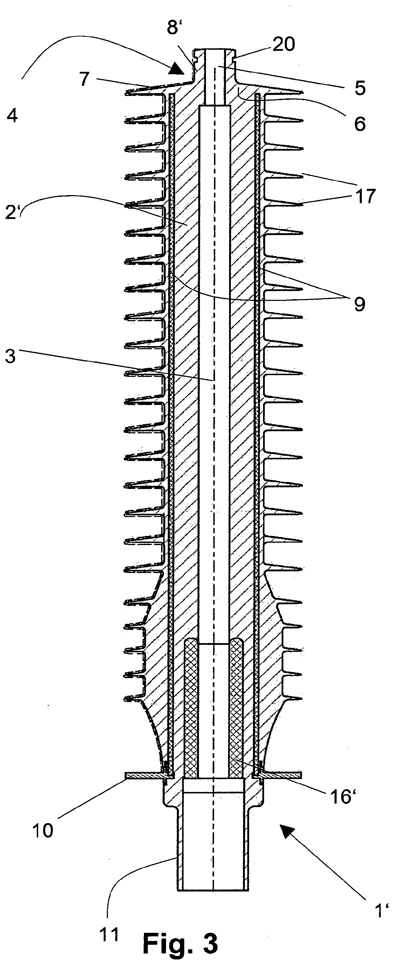

Fig. 3, aber auch Fig. 2, zeigt, dass der Fortsatz 8', 8 materialeinheitlich mit dem Isolierkörper 2', 2 ausgebildet ist. Im Gegensatz zu der Vorrichtung gemäß Fig. 2 weist der Fortsatz 8' der Vorrichtung gemäß Fig. 3 eine Klammernut 20 auf. Fig. 3 zeigt konkret einen Endverschluss 1'.

Fig. 3 zeigt auch, dass in den Isolierkörper 2' ein Feldsteuerkörper 16' aus leitfähigem Silikon eingebettet ist. Der Feldsteuerkörper 16' könnte auch aus refraktivem Kunststoff bestehen oder aus einem Material, welches mit spannungsbegrenzendem Ableitermaterial beschichtet ist. Der Feldsteuerkörper 16' weitet sich im konkreten Fall in Axialrichtung nicht auf, sondern zeigt einen in Axialrichtung konstant bleibenden Querschnitt. Der Feldsteuerkörper 16' ist nach Art eines Zylinderrohrs ausgeformt.

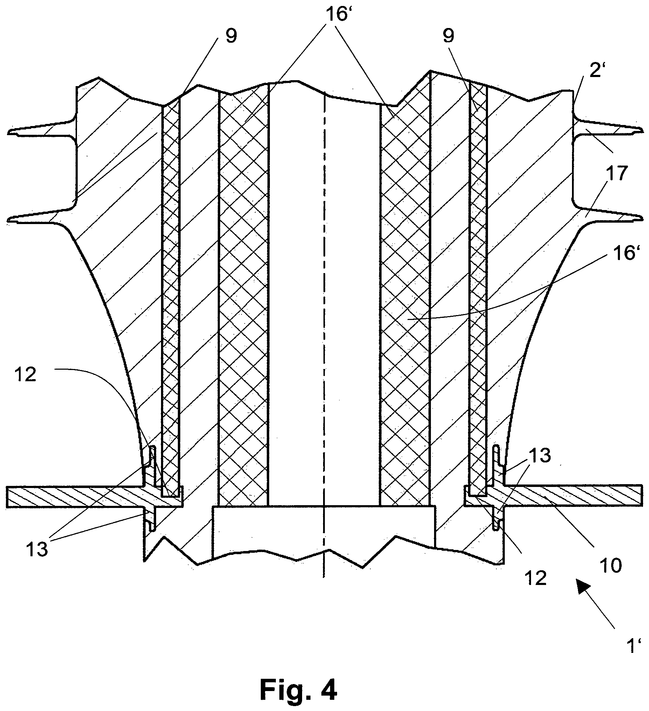

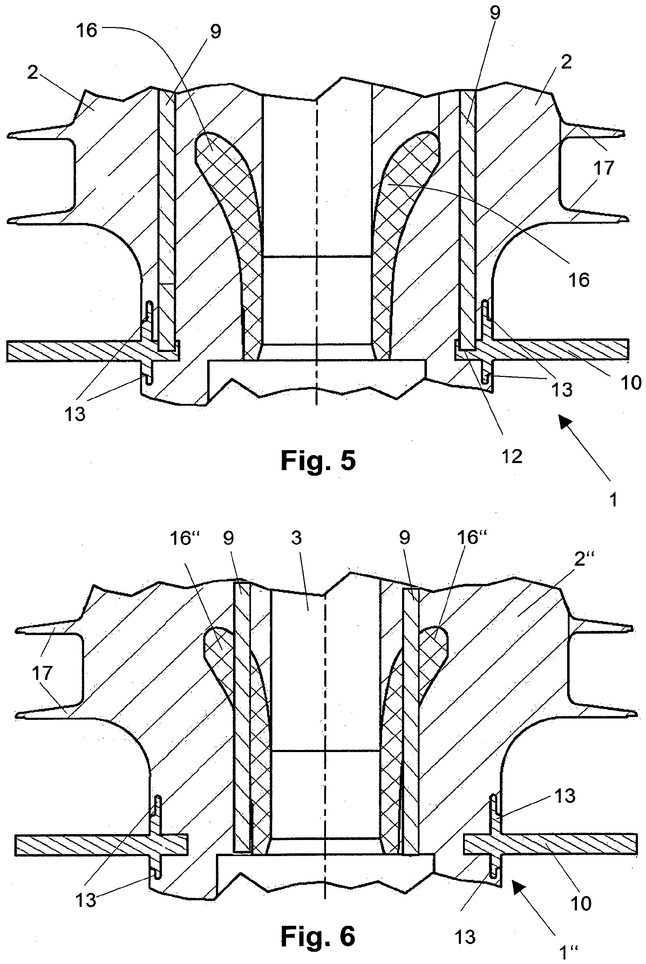

Fig. 4 und 5 zeigen, dass der jeweilige Isolierkörper 2', 2 die Verbindungsstellen 12 der Stützelemente 9 mit dem Befestigungsflansch 10 in sich aufnimmt und die Verbindungsstellen 12 vollständig einbettet. Der Befestigungsflansch 10 weist Verankerungselemente 13 auf. Diese erstrecken sich stiftartig beidseits des Befestigungsflanschs 10 in das Material des Isolierkörpers 2', 2.

Fig. 6 zeigt eine weitere Vorrichtung, nämlich einen weiteren Endverschluss 1", bei welchem mindestens ein Stützelement 9 zumindest abschnittsweise in einen Feldsteuerkörper 16" eingebettet, mit diesem stoffschlüssig verbunden ist und diesen durchgreift. Das Stützelement 9 kann mit dem Befestigungsflansch 10 mittelbar oder unmittelbar verbunden sein.

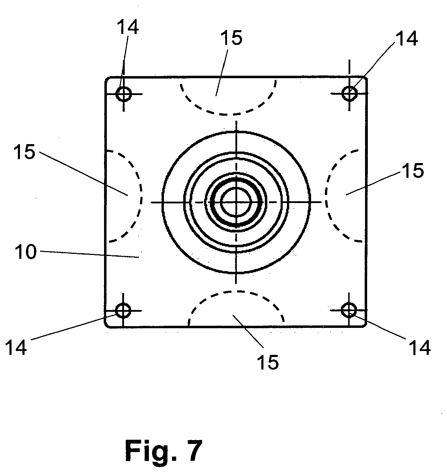

Fig. 7 zeigt, dass der Befestigungsflansch 10 mit mindestens einer nicht gezeigten Zugeinrichtung verbindbar ist. Hierzu weist der Befestigungsflansch 10 vier Durchgänge 14 auf, die in seinen Ecken ausgebildet sind.

Der Befestigungsflansch 10 kann Ausnehmungen, Aussparungen und/ oder Einbuchtungen 15 aufweisen, obwohl er hier quadratisch dargestellt ist. Die gestrichelten Linien zeigen solche Ausbuchtungen 15, die vorgesehen sein können, um Gewicht zu sparen.

### Bezugszeichenliste:

- 1, 1', 1": Endverschluss
- 2, 2', 2": Isolierkörper
- 3: Kabelaufnahme
- 4: Kopfabschnitt
- 5: Leiteraufnahme
- 6: Kuppe
- 7: Oberfläche
- 8, 8': Fortsatz
- 9: Stützelement
- 10: Befestigungsflansch
- 11: Tülle
- 12: Verbindungsstelle
- 13: Verankerungselement
- 14: Durchgang
- 15: Einbuchtung
- 16, 16', 16": Feldsteuerkörper
- 17: Schirmlippe
- 18: Zugeinrichtung
- 19: Leiterbolzen
- 20: Klammernut

## Patentansprüche

1. Vorrichtung, umfassend einen Isolierkörper (2, 2', 2") aus Kunststoff, wobei im Isolierkörper (2, 2', 2") eine Kabelaufnahme (3) für ein Kabel ausgebildet ist, wobei in einem Kopfabschnitt (4) des Isolierkörpers (2, 2') eine Leiteraufnahme (5) für einen Leiterbolzen (19) angeordnet ist, wobei der Isolierkörper (2, 2', 2") elastisch ausgebildet ist oder ein elastomeres Material aufweist oder aus einem solchen gefertigt ist, wobei innerhalb des Isolierkörpers (2, 2', 2") mehrere Stützelemente (9) aufgenommen sind, wobei die Stützelemente (9) aus einem elektrisch isolierenden Material gefertigt sind und als Stäbe oder Stangen ausgebildet sind, **dadurch gekennzeichnet, dass**
die Stützelemente (9) zumindest im Kopfabschnitt (4) selbsttragend angeordnet sind und dabei innerhalb des Isolierkörpers (2, 2') liegen und in diesen eingebettet sind, wobei die Stützelemente (9) mit einem freien Ende im Isolierkörper (2, 2') enden, ohne aus diesem herauszutreten.

2. Vorrichtung nach Anspruch 1, **dadurch gekennzeichnet, dass** die Stützelemente (9) im Kopfabschnitt (4) nicht miteinander verbunden sind, so dass die freien Enden der Stützelemente (9) im Kopfabschnitt (4) freistehend in den Isolierkörper (2) eingebettet sind, und/ oder dass die Stützelemente (9) im Bereich des Kopfabschnitts (4) nicht mit äußeren Elementen oder Stützeinrichtungen verbunden sind.

3. Vorrichtung nach Anspruch 1 oder 2, **dadurch gekennzeichnet, dass** die Stützelemente (9) parallel zueinander angeordnet sind und die Kabelaufnahme (3) umgeben.

4. Vorrichtung nach einem der voranstehenden Ansprüche, **dadurch**
**gekennzeichnet, dass** ein Stützelement (9) aus einem Kunststoff oder einem glasfaserverstärkten Kunststoff gefertigt ist oder ein solches Material aufweist und/ oder dass mindestens ein Stützelement (9) mit einem ableitenden und spannungsbegrenzenden Material beschichtet ist.

5. Vorrichtung nach einem der voranstehenden Ansprüche, **dadurch gekennzeichnet, dass** der Kopfabschnitt (4) eine Kuppe (6) aufweist, welche durch den Isolierkörper (2, 2') gebildet ist, wobei von der nach außen orientierten Oberfläche (7) der Kuppe (6) ein Fortsatz (8, 8') und/ oder ein Leiterbolzen (19) abragen.

6. Vorrichtung nach Anspruch 5, **dadurch gekennzeichnet, dass** der Fortsatz (8, 8') des Isolierkörpers (2, 2') die Leiteraufnahme (5) umfängt, säumt und/ oder nach Art eines Mantels oder Sockels umgibt.

7. Vorrichtung nach Anspruch 5 oder 6, **dadurch gekennzeichnet, dass** der Fortsatz (8') materialeinheitlich mit dem Isolierkörper (2') ausgebildet ist und/ oder eine Klammernut (20) aufweist.

8. Vorrichtung nach einem der voranstehenden Ansprüche, **dadurch gekennzeichnet, dass** das Material des Isolierkörpers (2, 2', 2") durch einen Befestigungsflansch (10) hindurch geführt ist und sich beidseits des Befestigungsflansches (10) erstreckt, wobei der Isolierkörper (2, 2') eine Tülle (11) für ein Kabel ausbildet.

9. Vorrichtung nach einem der voranstehenden Ansprüche, **dadurch gekennzeichnet, dass** ein Stützelement (9) mittelbar oder unmittelbar mit einem Befestigungsflansch (10) verbunden ist, welcher axial vom Kopfabschnitt (4) beabstandet ist.

10. Vorrichtung nach Anspruch 9, **dadurch gekennzeichnet, dass** der Isolierkörper (2, 2') mindestens eine Verbindungsstelle (12) des Stützelements (9) mit dem Befestigungsflansch (10) in sich aufnimmt und/ oder einbettet.

11. Vorrichtung nach einem der voranstehenden Ansprüche, **dadurch gekennzeichnet, dass** in den Isolierkörper (2, 2', 2") ein Feldsteuerkörper (16, 16', 16") aus leitfähigem Silikon oder aus refraktivem Kunststoff oder ein mit einem ableitenden und spannungsreduzierenden Material beschichteter Körper eingebettet ist.

12. Vorrichtung nach einem der voranstehenden Ansprüche, **dadurch gekennzeichnet, dass** ein Stützelement (9) zumindest abschnittsweise in einen Feldsteuerkörper (16") eingebettet und/ oder mit diesem stoffschlüssig verbunden ist und/ oder diesen durchgreift.

13. Vorrichtung nach einem der voranstehenden Ansprüche, **dadurch gekennzeichnet, dass** ein Befestigungsflansch (10) und/ oder ein Leiterbolzen (19) mit mindestens einer Zugeinrichtung (18) verbindbar ist und/ oder eine solche aufweist.

14. Vorrichtung nach einem der voranstehenden Ansprüche, **dadurch gekennzeichnet, dass** ein Befestigungsflansch (10) Ausnehmungen, Aussparungen und/ oder Einbuchtungen (15) aufweist.

15. Vorrichtung nach einem der Ansprüche 5 bis 14, **dadurch gekennzeichnet, dass** der Isolierkörper (2, 2') durch den Fortsatz (8, 8') zumindest abschnittsweise reversibel oder irreversibel verschließbar ist und/ oder dass der Fortsatz (8, 8') einen Anschluss für Druckgas aufweist.

## Claims

1. Apparatus, comprising an insulating body (2, 2', 2'') made from plastic, a cable receptacle (3) for a cable being configured in the insulating body (2, 2', 2''), a conductor receptacle (5) for a conductor bolt (19) being arranged in a head section (4) of the insulating body (2, 2'), the insulating body (2, 2', 2'') being of elastic configuration or comprising an elastomeric material or being manufactured from a material of this type, a plurality of supporting elements (9) being received within the insulating body (2, 2', 2''), the supporting elements (9) being manufactured from an electrically insulating material and being configured as rods or bars, **characterized in that** the supporting elements (9) are arranged in a self-supporting manner at least in the head section (4) and lie within the insulating body (2, 2') here and are embedded into the latter, the supporting elements (9) ending with a free end in the insulating body (2, 2'), without emerging from the latter.

2. Apparatus according to Claim 1, **characterized in that** the supporting elements (9) in the head section (4) are not connected to one another, with the result that the free ends of the supporting elements (9) in the head section (4) are embedded into the insulating body (2) in a freestanding manner, and/or **in that** the supporting elements (9) in the region of the head section (4) are not connected to external elements or supporting devices.

3. Apparatus according to Claim 1 or 2, **characterized in that** the supporting elements (9) are arranged parallel to one another and surround the cable receptacle (3).

4. Apparatus according to one of the preceding claims, **characterized in that** a supporting element (9) is manufactured from a plastic or a glass fibre-reinforced plastic or comprises a material of this type, and/or **in that** at least one supporting element (9) is coated with a discharging and voltage-limiting material.

5. Apparatus according to one of the preceding claims, **characterized in that** the head section (4) has a tip (6) which is formed by way of the insulating body (2, 2'), a projection (8, 8') and/or a conductor bolt (19) protruding from the outwardly oriented surface (7) of the tip (6).

6. Apparatus according to Claim 5, **characterized in that** the projection (8, 8') of the insulating body (2, 2') envelops the conductor receptacle (5), lines it and/or surrounds it in the manner of a sheath or socket.

7. Apparatus according to Claim 5 or 6, **characterized in that** the projection (8') is configured from the same material as the insulating body (2') and/or has a clamp groove (20).

8. Apparatus according to one of the preceding claims, **characterized in that** the material of the insulating body (2, 2', 2'') is guided through a fastening flange (10) and extends on both sides of the fastening flange (10), the insulating body (2, 2') configuring a grommet (11) for a cable.

9. Apparatus according to one of the preceding claims, **characterized in that** a supporting element (9) is connected indirectly or directly to a fastening flange (10) which is spaced apart axially from the head section (4) .

10. Apparatus according to Claim 9, **characterized in that** the insulating body (2, 2') receives and/or embeds at least one connecting point (12) of the supporting element (9) with the fastening flange (10) within itself.

11. Apparatus according to one of the preceding claims, **characterized in that** a field control body (16, 16', 16'') made from conductive silicone or from refractive plastic or a body which is coated with a discharging and voltage-reducing material is embedded into the insulating body (2, 2', 2").

12. Apparatus according to one of the preceding claims, **characterized in that** a supporting element (9) is embedded at least in sections into a field control body (16'') and/or is connected to the latter in an integrally joined manner and/or engages through the latter.

13. Apparatus according to one of the preceding claims, **characterized in that** a fastening flange (10) and/or a conductor bolt (19) can be connected to at least one pulling device (18) and/or have/has a pulling device of this type.

14. Apparatus according to one of the preceding claims, **characterized in that** a fastening flange (10) has recesses, cut-outs and/or indentations (15).

15. Apparatus according to one of Claims 5 to 14, **characterized in that** the insulating body (2, 2') can be closed reversibly or irreversibly at least in sections by way of the projection (8, 8'), and/or **in that** the projection (8, 8') has a connector for compressed gas.

## Revendications

1. Arrangement, comprenant un corps isolant (2, 2', 2") en matière plastique, un logement de câble (3) pour un câble étant formé dans le corps isolant (2, 2', 2"), un logement de conducteur (5) pour un goujon conducteur (19) étant disposé dans une portion de tête (4) du corps isolant (2', 2"), le corps isolant (2, 2', 2") étant de configuration élastique ou possédant un matériau élastomère ou étant fabriqué dans un tel matériau, plusieurs éléments de soutien (9) étant accueillis à l'intérieur du corps isolant (2, 2', 2"), les éléments de soutien (9) étant fabriqués en un matériau électriquement isolant et étant configurés sous la forme de barres ou de tiges,
**caractérisé en ce que**
les éléments de soutien (9) sont disposés de manière autoportante au moins dans la portion de tête (4) et reposent ainsi à l'intérieur du corps isolant (2, 2') et étant enrobés dans celui-ci, les éléments de soutien (9) se terminant par une extrémité libre dans le corps isolant (2, 2') sans sortir de celui-ci.

2. Arrangement selon la revendication 1, **caractérisé en ce que** les éléments de soutien (9) dans la portion de tête (4) ne sont pas reliés les uns avec les autres, de sorte que les extrémités libres des éléments de soutien (9) dans la portion de tête (4) sont enrobées indépendamment dans le corps isolant (2), et/ou **en ce que** les éléments de soutien (9) dans la portion de tête (4) ne sont pas reliés à des éléments extérieurs ou des dispositifs de soutien.

3. Arrangement selon la revendication 1 ou 2, **caractérisé en ce que** les éléments de soutien (9) sont disposés parallèlement les uns aux autres et entourent le logement de câble (3).

4. Arrangement selon l'une des revendications précédentes, **caractérisé en ce qu'**un élément de soutien (9) est fabriqué en une matière plastique ou une matière plastique renforcée de fibres de verre ou présente un tel matériau et/ou **en ce qu'**au moins un élément de soutien (9) est revêtu d'un matériau d'évacuation et limiteur de voltage.

5. Arrangement selon l'une des revendications précédentes, **caractérisé en ce que** la portion de tête (4) possède un dôme (6) qui est formé par le corps isolant (2, 2'), un prolongement (8, 8') et/ou un goujon conducteur (19) faisant saillie de la surface (7) orientée vers l'extérieur du dôme (6).

6. Arrangement selon la revendication 5, **caractérisé en ce que** le prolongement (8, 8') du corps isolant (2, 2') enveloppe le logement de conducteur (5), le borde et/ou l'entoure à la manière d'une enveloppe ou d'un socle.

7. Arrangement selon la revendication 5 ou 6, **caractérisé en ce que** le prolongement (8') est réalisé d'un seul matériau avec le corps isolant (2') et/ou possède une rainure de retenue (20).

8. Arrangement selon l'une des revendications précédentes, **caractérisé en ce que** le matériau du corps isolant (2, 2', 2") est passé à travers une bride de fixation (10) et s'étend des deux côtés de la bride de fixation (10), le corps isolant (2, 2') formant une gaine (11) pour un câble.

9. Arrangement selon l'une des revendications précédentes, **caractérisé en ce que** l'élément de soutien (9) est relié directement ou indirectement à une bride de fixation (10) qui est espacée axialement de la portion de tête (4).

10. Arrangement selon la revendication 9, **caractérisé en ce que** le corps isolant (2, 2') accueille dans celui-ci et/ou enrobe au moins un point de liaison (12) de l'élément de soutien (9) avec la bride de fixation (10).

11. Arrangement selon l'une des revendications précédentes, **caractérisé en ce qu'**un corps de contrôle de cellule (16, 16', 16") en silicone conducteur ou en matière plastique réfractaire ou un corps revêtu d'un matériau d'évacuation et limiteur de voltage est enrobé dans le corps isolant (2, 2', 2").

12. Arrangement selon l'une des revendications précédentes, **caractérisé en ce qu'**un élément de soutien (9) est au moins par certaines portions enrobé dans un corps de contrôle de cellule (16") et/ou relié avec celui-ci par fusion de matières et/ou traverse celui-ci.

13. Arrangement selon l'une des revendications précédentes, **caractérisé en ce qu'**une bride de fixation (10) et/ou un goujon conducteur (19) peut être relié à au moins un dispositif tendeur (18) et/ou possède un tel dispositif.

14. Arrangement selon l'une des revendications précédentes, **caractérisé en ce qu'**une bride de fixation (10) possède des creux, des évidements et/ou des renfoncements (15).

15. Arrangement selon l'une des revendications 5 à 14, **caractérisé en ce que** le corps isolant (2, 2') peut être fermé de manière réversible ou irréversible par le prolongement (8, 8') au moins dans certaines portions et/ou **en ce que** le prolongement (8, 8') possède un raccord pour du gaz comprimé.
